Europäisches Patentamt

European Patent Office

Office européen des brevets

(19)

(11) Numéro de publication: **0 158 575**
**B1**

(12) **FASCICULE DE BREVET EUROPEEN**

(45) Date de publication du fascicule du brevet:
**13.07.88**

(21) Numéro de dépôt: **85430011.8**

(22) Date de dépôt: **04.04.85**

(51) Int. Cl.⁴: **B 29 C 41/06,** B 29 C 41/46,
B 29 C 35/08

(54) Machine de rotomoulage.

(30) Priorité: **06.04.84 FR 8405605**

(43) Date de publication de la demande:
**16.10.85 Bulletin 85/42**

(45) Mention de la délivrance du brevet:
**13.07.88 Bulletin 88/28**

(84) Etats contractants désignés:
**BE CH DE GB IT LI NL SE**

(56) Documents cités:
**CH - A - 553 642**
**DE - A - 1 779 001**
**FR - A - 1 403 000**
**FR - A - 1 513 460**
**FR - A - 1 600 351**
**FR - A - 2 217 696**
**US - A - 3 734 665**
**US - A - 3 822 980**
**US - A - 3 938 928**

(73) Titulaire: **Société à Responsabilite Limltée : DATOME, 760, Chemin de Fabre à Gavet, F-83500 La Seyne-s/Mer (FR)**

(72) Inventeur: **Meuret, Paul, Les Bastides Chemin de Fabre à Gavet, F-83500 - La Seyne-s/Mer (FR)**

(74) Mandataire: **Moretti, René et al, C/O Cabinet BEAU DE LOMENIE 14, rue Raphael, F-13008 Marseille (FR)**

ACTORUM AG

# Description

La présente invention a pour objet une machine de rotomoulage.

Le secteur technique de l'invention est celui des appareils et des dispositifs contribuant à la mise en œuvre d'objets en matière plastique par le procédé de moulage par rotation.

On sait que selon ce procédé, on entraîne lentement en rotation autour de deux axes perpendiculaires, par exemple à dix tours par minute, un moule métallique dans lequel on a préalablement introduit une température de l'ordre de 250°C pendant la rotation, la matière plastique adhère progressivement à sa paroi interne jusqu'à former une pièce d'une épaisseur correspondant à la quantité de produit de base introduit dans le moule. Le dépôt se forme d'abord par semi-fusion du produit tandis que la gélification qui suit donne la cohésion du produit fabriqué.

Le moule est ensuite refroidi et le produit démoulé par ouverture du moule.

Le produit de base est principalement du chlorure de polyvinyle liquide ou du polyéthylène en poudre. Plusieurs moules peuvent être montés côte à côte sur un même système tournant.

La technique du rotomoulage convient principalement à la réalisation des pièces qui ne peuvent pas être réalisées par les autres techniques plus répandues telles que: l'injection ou le soufflage... ou pour la fabrication de pièces en petites ou moyennes séries.

Actuellement plusieurs types de machines de rotomoulage sont connus.

a) Machines simples à un seul poste comportant un système de rotation selon deux axes et dont le chauffage du moule est effectué à l'air libre, par exemple par des rampes à gaz. Ces machines sont les plus anciennes et sont encore utilisées pour le moulage des grosses pièces.

b) Machines à va et vient et machines à chariots multiples. Ces machines comportent un four unique accessible à l'un ou l'autre de deux chariots situés de part et d'autre qui portent chacun un système de double rotation du moule et se présentent successivement dans le four. Le four économise de l'énergie, toutefois la température tombe lors de l'ouverture des portes du four. Certaines installations de ce type comportent des chariots supportant chacun le système tournant en porte à faux ou au-dessus afin de l'introduire dans le four et ensuite en roulant de le présenter aux postes de refroidissement et aux postes de chargement/déchargement. Le mouvement principal de rotation peut être un mouvement alternatif de balancier, la rotation secondaire est continue.

Ces machines sont surtout utilisées pour les grosses pièces.

c) Machine à carrousel à trois ou quatre postes. De nombreuses machines de ce type sont actuellement utilisées. Le principe appliqué dans ce type de machine est de faire tourner un carrousel à trois ou quatre bras orientés à 120° ou 90°, lesquels portent à leurs extrémités un mécanisme d'entraînement des moules. Le bras tourne sur lui-même tandis que l'autre rotation est assurée par un arbre interne au bras. Les deux rotations sont commandées par des moyens associés du carrousel ou par des motorisations propres à chaque bras. La rotation du carrousel de 120° ou 90° permet de faire passer les moules aux divers postes installés à la périphérie:

– chargement/déchargement à l'air libre;
– étuve;
– chambre de refroidissement à l'air et/ou à l'eau pulvérisée.

Dans le cas de la machine à quatre bras, cell-ci comporte une seconde chambre de refroidissement car la durée de celui-ci est souvent plus longue que la durée de chauffage.

Ces machines conviennent plus spécialement à des pièces de petites ou moyennes dimensions car leur encombrement devient vite excessif.

On connaît également des machines ou installations combinant différemment les postes. De telles machines comprennent quatre bras tournants desservant un même four en succession régulière. Au lieu d'être entraînés par un carrousel, ces bras desservent chacun le four et un poste hors du four où à lieu le refroidissement et le démoulage.

d) Machines utilisant des moules à double paroi entre lesquelles circule de l'huile chaude puis froide. Ces machines nécessitent des moules coûteux et des installations hydrauliques complexes et sont pratiquement abondonnées de nos jours.

On connaît également une machine à mouler rotative, laquelle est décrite dans le brevet FR-A-1 600 351 et se compose d'un châssis-support et d'un châssis auxiliaire, disposé de façon rotative autour d'un axe horizontal sur ledit support. Le châssis auxiliaire est conçu pour recevoir un moule destiné à être placé au centre du châssis et comporte des portes basculantes.

Le chauffage du moule est obtenu par rayonnement direct au moyen de radiateurs à infrarouge fonctionnant au gaz naturel, lesquels sont disposés en arc de cercle pour entourer partiellement un côté du moule. Lesdites portes basculantes sont garnies à l'intérieur de surfaces réflectrices pour réfléchir sur le moule une partie du rayonnement émis par les radiateurs et fournir une chaleur supplémentaire à certaines surfaces prédéterminées du moule. Ces surfaces réflectrices sont formées à la demande selon diverses courbures, par exemple paraboliques ou autres.

Les machines actuelles disponibles sur le marché présentent de nombreux inconvénients spécifiques.

Les machines du type carrousel les plus répandues imposent par la rotation simultanée de leurs bras que la durée du chauffage soit égale à celle du refroidissement et à celle des opérations de chargement/déchargement. Or c'est loin d'être le cas, notamment lorsque les bras portent des produits moulés de tailles différentes.

Ces machines tu type carrousel comportent également des inconvénients du fait de leur conception et de leur structure, ce qui entraîne une relative fragilité. De plus la rotation des moules engendre un volume sphérique important et nécessite un four et une chambre de refroidissement de grandes dimensions, encore accru par leur forme en secteur pour disposer d'ouvertures planes d'entrée et de sortie ce qui se traduit par un encombrement important. La solution à quatre bras articulés susmentionnée est plus pratique et plus souple que la solution carrousel mais elle n'élimine pas les autres inconvénients propres aux bras: fragilité, encombrement, charge admissible.

D'autres machines à axe horizontal et qui desservent trois postes: four dans le secteur haut, chargement et déchargement en bas sur la partie avant, refroidissement en bas et à l'arrière sont très complexes et étant donné la hauteur disponible dans un atelier, ne peuvent être utilisées que pour la mise en œuvre de pièces de faible volume.

Les machines à va et vient et similaires sont plus mécaniques dans leur agencement, toutefois des défauts de synchronisme des phases de fabrication sont relevés. En effet le décalage est encore important entre la durée du chauffage et celle du refroidissement à laquelle s'ajoute la durée des opérations de chargement et de déchargement. Le mécanisme de rotation est situé en porte à faux à bout de bras avec tous les inconvénients rencontrés dans le type à carrousel déjà cités.

L'alignement des postes est favorable mais l'encombrement en longueur est important du fait de la longueur des chariots et des bras en porte à faux.

Toutes ces machines consomment beaucoup d'énergie en pure perte, pour le chauffage des bras et des systèmes tournants pour l'alimentation des nombreux auxiliaires nécessaires de ventilation et d'entraînement, et en déperdition du four par portes et parois.

Les machines à seul poste, qui sont les plus anciennes, bien que très robustes ont comme inconvénient majeur de consommer davantage de gaz pour le chauffage, qui s'effectuant à l'air libre donne lieu à une répartition irrégulière de la température défavorable au procédé. De telles machines sont toutefois actuellement utilisées pour la fabrication de grosses pièces. Une de ces machines intègre un système de chauffe et de refroidissement autour des moules en rotation. La rotation principale s'effectue sur des rouleaux comme pour une cage d'écureuil et le chauffage est obtenu par convection forcée comme dans les fours des carrousels et des dispositifs à va et vient, par un circuit situé à l'extérieur.

Dans une autre machine à un seul poste, le four est fixe et le moule situé à l'intérieur du four subit un mouvement de balancier et une rotation continue. Ces machines modernes à un seul poste intègrent le four et un système de refroidissement par échange de chaleur mais comportent des inconvénients au niveau de la partie mécanique et des séquences de cycle de fonctionnement.

Enfin selon la machine décrite dans le brevet FR-A-1 600 351, le moule est chauffé par plusieurs radiateurs à infrarouge fonctionnant au gaz naturel et disposés en arc de cercle pour entourer partiellement un côté du moule. L'apport supplémentaire de chaleur pour chauffer certaines surfaces du moule est obtenu au moyen de surfaces réflectrices et en vue d'obtenir le rayonnement réfléchi sur certaines parties du moule, il est nécessaire de procéder à la mise en place sur les faces internes des portes basculantes des réflecteurs ayant une ou des courbures spécifiques en fonction de la forme du moule et des zones devant être soumises au rayonnement. Un tel dispositif est d'une très grande complexité.

La présente invention vise à remédier à ces inconvénients.

L'objectif à atteindre est une machine de rotomoulage à un poste où le ou les moules sont chauffés pour un moulage des pièces sans manutention excessive des moules, la machine comprenant également un pré-refroidissement incorporé, le refroidissement final étant éventuellement réalisé de façon traditionnelle à l'extérieur de l'enceinte. Le cycle thermique requis s'effectue donc ainsi à un même poste.

L'objectif est également de mettre en œuvre la chauffe par des moyens incorporés à une enceinte tournante, ces moyens permettant de régler la chauffe ponctuellement sur la longueur du moule en fonction des pièces à réaliser et de la conformation des moules et d'économiser de l'énergie en chauffage et en ventilation.

Un autre objectif est de doter la machine de moyens annexes facilitant le chargement/déchargement en vue de rentabiliser au mieux un atelier de rotomoulage et d'obtenir des produits de bonne qualité à des prix compétitifs.

Ces objectifs sont atteints par la machine de rotomoulage comportant une enceinte calorifugée montée à rotation sur un bâti autour d'un axe sensiblement horizontal, laquelle enceinte comporte des moyens pour recevoir et entraîner en rotation au moins un moule autour d'un axe perpendiculaire à l'axe de rotation de l'enceinte et des moyens de chauffage par radiation dont le rayonnement est dirigé sur le moule, caractérisée en ce que lesdits moyens de chauffage par radiation sont situés à l'intérieur de ladite enceinte et se composent d'une part d'éléments radiants qui entourent le moule, lesquels éléments sont répartis sur la hauteur de l'enceinte et devant les faces internes réfléchissantes de ses parois latérales et d'autre part d'éléments radiants qui sont répartis devant les faces internes réfléchissantes de son fond et de son couvercle pour réfléchir les radiations vers la partie centrale de l'enceinte où se trouve le moule pour chauffer celui-ci par rayonnement.

Dans un mode de réalisation, la machine comporte plusieurs ensembles d'éléments radiants répartis à la périphérie interne de l'enceinte, lesquels ensembles sont superposés pour couvrir la hauteur de l'enceinte et comportent chacun des moyens de commande de la chauffe pour moduler celle-ci sur la hauteur de l'enceinte. Celle-ci est montée à rotation autour de deux parties d'axe coaxiales et sensiblement horizontales et l'enceinte est d'une section droite polygonale et comporte, à ses extrémités latérales où se trouvent lesdites parties d'axe deux caissons délimités par les parois latérales de l'enceinte et par deux parois réfléchissantes parallèles entre elles et à l'axe de rotation du moule, lesquelles parois s'étendent sur la hauteur de l'emplacement du moule, comportent une pluralité d'ouvertures pour le passage de l'air de refroidissement du moule, lequel air est admis froid dans l'un des caissons par l'une desdites parties d'axe est réparti sur la hauteur de l'emplacement du moule par la paroi perforée dudit caisson et est recueilli dans l'autre caisson après être passé sur le moule pour être évacué chaud par l'autre partie d'axe. Le moule est monté sur un plateau entraîné en rotation à la partie inférieure de l'enceinte, lequel plateau est ajouré et se déplace en rotation au-dessus desdits éléments radiants qui sont répartis sur le fond de l'enceinte. De préférence, le plateau se compose de plusieurs bras radiaux s'étendant à partier d'un moyeu central monté tournant dans le fond de l'enceinte, lesquels bras sont reliés l'un à l'autre par des barres de liaison tangentes à un cercle théorique concentrique audit moyeu.

Le moule est constitué de deux demi-coquilles et comporte des organes de verrouillage pour le solidariser au plateau, lesquels organes sont actionnés de l'extérieur de l'enceinte au moyen d'une clé passée dans au moins une ouverture réservés dans le fond de l'enceinte.

Dans une machine dont l'enceinte est agencée pour recevoir plusieurs moules équidistants de son centre, l'enceinte comporte, à sa partie inférieure, des arbres passés dans des orifices réservés dans son fond, lesquels arbres sont équidistants du centre de l'enceinte et comportent des moyens de liaison pour coopérer avec des moyens d'entraînement des moules pour les mettre en rotation, lesquels arbres sont soumis à des moyens moteurs situés à l'extérieur de l'enceinte.

Les moules sont montés entre deux supports étoilés dont les bras radiaux d'un support sont parallèles aux bras radiaux de l'autre et comportent, à leur extrémité libre, un orifice circulaire pour recevoir un tourillon et permettre la rotation des moules, chacun des moules étant porté par deux bras, lesquels tourillons sont tenus en translation par des moyens qui s'opposent à ce que les supports échappent aux tourillons. Les bras radiaux de chacun des deux supports s'étendent à partier d'un moyeu central.

Pour le chargement d'un ensemble de moules, la machine comporte des moyens de chargement comprenant un chariot aérien qui comporte une colonne s'étendant vers le bas dans une position sensiblement verticale et montée tournante autour de son axe longitudinal à l'extrémité libre de laquelle sont fixées deux broches s'étendant en opposition et perpendiculairement à la colonne, lesquelles broches se placent dans une position sensiblement coaxiale à l'enceinte immobilisée en position sensiblement horizontale. Chaque ensemble de moules est porté par une desdites broches, laquelle est engagée dans les moyeux des supports de moules et le chariot comporte des moyens pour être déplacé dans l'axe de l'enceinte ainsi immobilisée pour placer un ensemble de moules dans l'enceinte ou retirer cet ensemble de celle-ci.

Pour le chargement d'un moule de grosse dimension, la machine comprend un chariot aérien qui comporte une colonne s'étendant vers le bas dans une position sensiblement verticale et montée tournante autour de son axe longitudinal, à l'extrémité libre de laquelle sont montés deux supports de moules situés de part et d'autre de la colonne, lesquels supports comprennent des bras radiaux, lesquels bras des deux supports divergent légèrement deux à deux à partir d'un mandrin central par rapport à la colonne et ont leurs extrémités libres situées dans des plans parallèles entre eux et à la colonne et comportent auxdites extrémités des moyens de fixation du moule mis en appui sur un épaulement en saillie réservé du côté du bord supérieur du moule, lesdits supports comportent en outre des moyens de centrage du moule.

Ladite machine comporte en outre un bras de suspension monté à roulement sur le rail de roulement du chariot dont l'extrémité libre du bras se situe au niveau des broches ou du mandrin central des supports et comporte un logement cylindrique pour recevoir un tourillon coaxial au moyeu d'un des supports d'un ensemble de moules ou d'un seul moule, pour soutenir la charge portée par l'une des broches ou l'un des supports fixés à la colonne lorsque l'autre broche ou l'autre support est déchargé.

Ladite machine comporte en outre un portique disposé devant l'entrée de l'enceinte en position horizontale et perpendiculairement à l'axe longitudinal de celle-ci, lequel portique comporte deux palans guidés le long de sa traverse haute, lesquels palans comportent des moyens d'accrochage du couvercle de l'enceinte qui est en deux parties pour s'effacer latéralement de part et d'autre de celle-ci.

Dans un autre mode de réalisation, la machine comporte des moyens de chargement comportant deux chariots aériens roulant sur un rail situé au-dessus de l'enceinte, de telle sorte que lorsqu'elle est immobilisée en position sensiblement verticale, le rail s'étend au-dessus du centre de l'enceinte, laquelle comporte de part et d'autre un poste de refroidissement des moules par pulvérisation d'eau.

Lesdits chariots fonctionnent en va et vient pour que pendant qu'un moule est en phase de refroidissement un autre soit en phase de chauffe. Lesdits chariots comportent des moyens pour entraîner les moules en rotation autour de leur axe longitudinal pour les faire tourner devant les rampes de pulvérisation d'eau montées fixes dans les postes de refroidissement.

Le résultat de l'invention est une machine de rotomoulage à poste unique dans lequel un ou plusieurs moules sont chauffés par rayonnement dans une enceinte montée à rotation suivant deux axes perpendiculaires, laquelle machine est dotée de moyens de chargement/déchargement en vue de faciliter la manutention des moules en course de fabrication.

La machine selon l'invention est robuste et fiable du fait de sa conception et de sa réalisation à partir d'organes mécaniques simples. Elle est d'une capacité élevée pour un encombrement hors tout réduit. Elle est économique étant donné l'efficacité du chauffage électrique direct par rayonnement limité pratiquement au moule et qui, en outre, permet d'obtenir une homogénéité des températures durant la chauffe et également pendant le refroidissement et ainsi des produits de haute qualité.

Cette machine dispose d'une large gamme de vitesses et de températures ce qui permet d'obtenir d'excellentes performances et des cadences élevées pour un procédé lent. Du fait qu'elle comporte un seul poste où les opérations s'effectuent les unes après les autres, plusieurs machines peuvent occuper un espace qui serait nécessaire à une des machines actuellement utilisées du genre à carrousel. Les machines selon l'invention peuvent être conduites par un seul opérateur.

D'autres avantages et les caractéristiques de l'invention ressortiront encore à la lecture de la description suivante, non limitative, d'une machine de rotomoulage et des ses variantes en référence au dessin annexé sur lequel:

– la figure 1 est une vue en coupe transversale d'une machine selon l'invention;

– la figure 2 est une vue en coupe suivant la ligne II–II de la figure 1;

– la figure 3 est une vue en perspective schématique illustrant les ensembles d'éléments radiants et de leurs commandes;

– la figure 4 est une vue en élévation d'une machine selon l'invention dotée de moyens de chargement/déchargement du type à va et vient et comportant deux postes de refroidissement par pulvérisation d'eau;

– la figure 5 est une vue en coupe transversale d'une machine selon l'invention équipée de moyens pour entraîner en rotation plusieurs moules, lesquels sont réunis pour former un ensemble manutentionnable;

– la figure 6 est une vue en élévation d'une machine immobilisée en position horizontale devant un dispositif de chargement/déchargement à déplacement horizontal;

– la figure 7 est une vue de dessus de l'ensemble de la machine illustrée à la figure 6 dont l'enceinte est représentée immobilisée en position verticale;

– la figure 8 est une vue en élévation d'un dispositif de chargement/déchargement analogue à celui illustré à la figure 6 mais comportant des moyens pour maintenir chacun un moule de grande dimension.

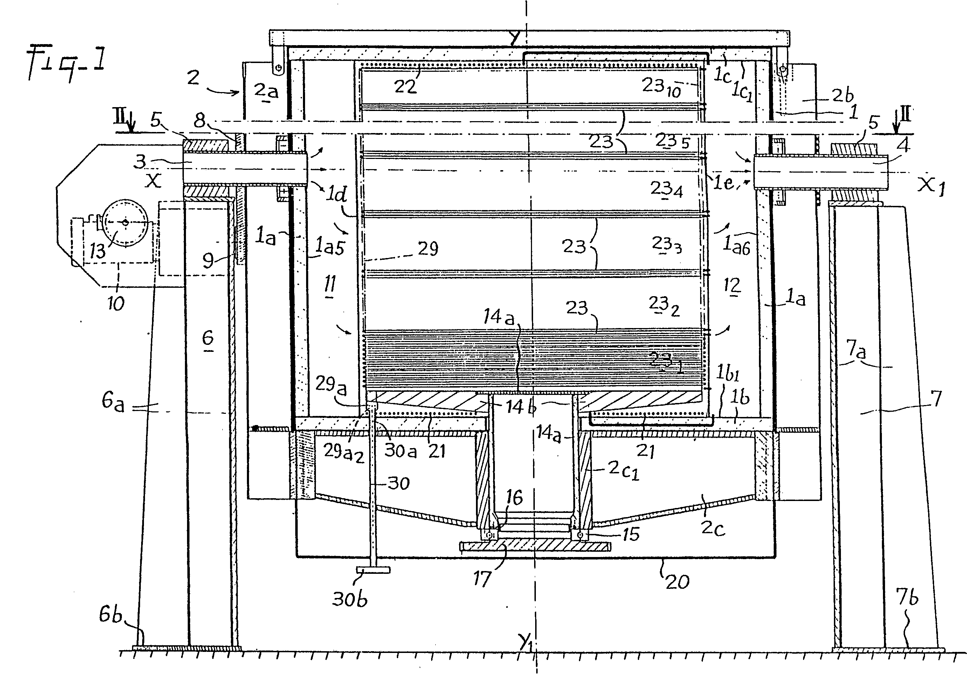

On se reporte d'abord aux figures 1 à 3 du dessin.

La machine selon l'invention comporte une enceinte 1 destinée à recevoir un ou plusieurs moules, laquelle enceinte est d'une section droite hexagonale et comporte des parois latérales 1a, un fond 1b et un couvercle 1c articulé à la paroi latérale, lesquels sont constitués par des doubles parois calorifugées.

L'enceinte 1 est montée sur un support en U 2 comportant deux montants latéraux 2a/2b tubulaires, d'une section droite rectangulaire et une traverse 2c mécanosoudée qui est au contact du fond 1b de l'enceinte. Les montants latéraux s'étendent sur la hauteur de l'enceinte et sont situés au milieu des parois d'extrémités $1a_1/1a_2$ de celle-ci.

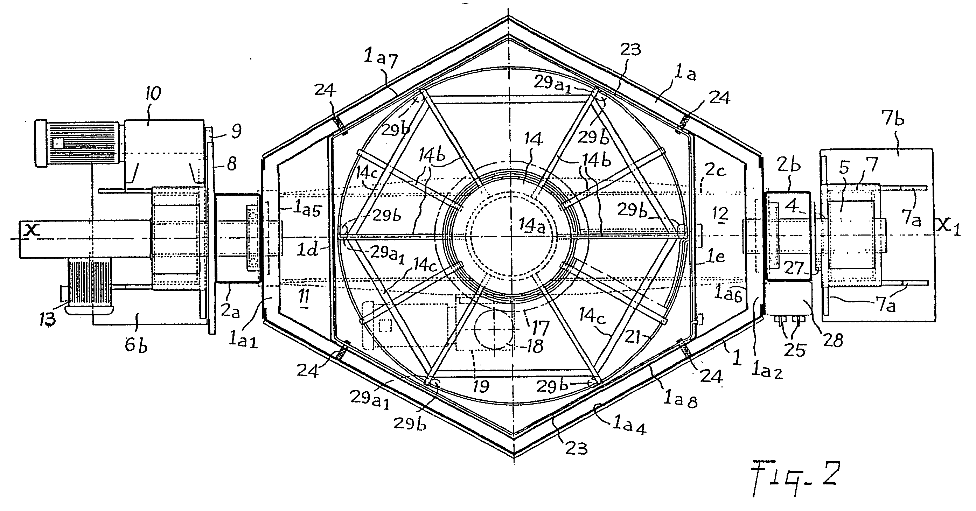

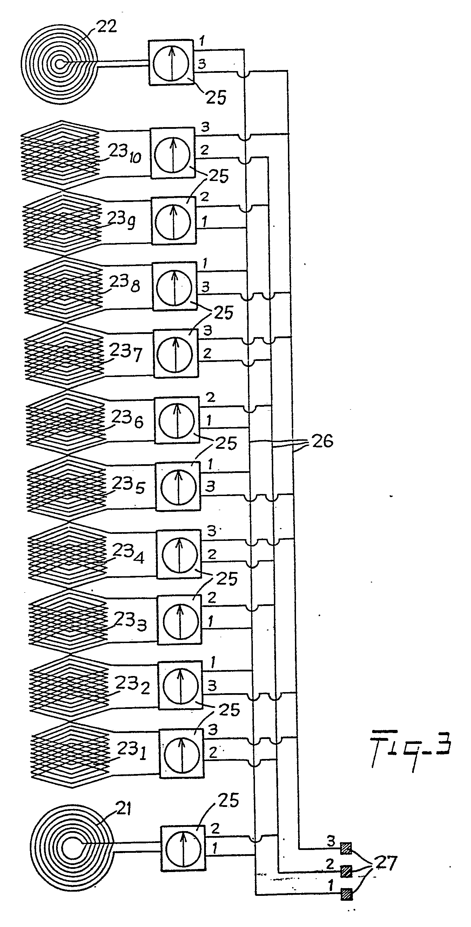

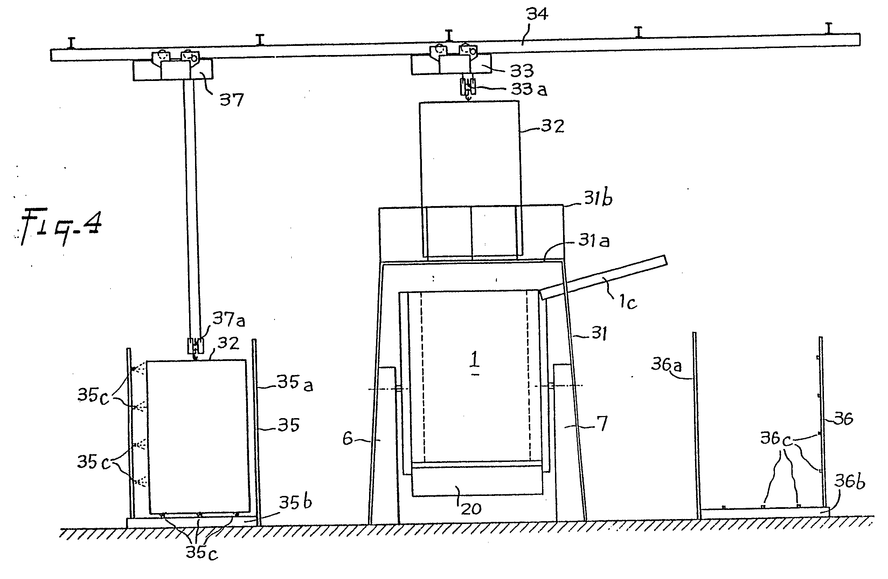

Tel que cela est représenté à la figure 2, l'enceinte est symétrique par rapport à un axe xx1 situé dans un plan perpendiculaire au fond 1b, lequel axe xx1 est également l'axe de rotation de l'enceinte. Elle comporte deux axes creux 3/4 coaxiaux, alignés sur l'axe de rotation xx1. Ces axes débouchent dans l'enceinte, sont perpendiculaires aux parois d'extrémités $1a_1/1a_2$ et sont sensiblement situés à mi-hauteur de l'enceinte de telle sorte que l'axe xx1 passe par le centre de gravité de celle-ci. Les axes 3/4 sont emmanchés dans des supports 5, fixés à l'extrémité supérieure de deux montants 6/7 ancrés dans le sol et constituant le bâti de la machine. Par exemple ces montants sont des tubes d'une section droite rectangulaire raidis par des voiles 6a/7a pour résister aux sollicitations statiques et dynamiques de l'enceinte en rotation; les tubes et les voiles étant fixés à des plaques de base 6b/7b. Le montant 2 comporte une couronne dentée 8 qui coopère avec un pignon 9 calé sur l'arbre de sortie d'un motoréducteur 10 fixé au montant 6. Ce motoréducteur entraîne l'enceinte 1 en rotation continue autour de l'axe xx1. L'enceinte comporte deux demi-coquilles $1a_3/1a_4$ formées par deux parois identiques concourant sur une ligne s'étendant sur la hauteur de l'enceinte, lesquelles demi-coquilles sont identiques et sont fixées auxdites parois d'extrémités $1a_1/1a_2$. Les plaques internes $1a_7/1a_8$ de la double paroi des demi-coquilles $1a_3/1a_4$ et des parois d'extrémités $1a_1/1a_2$ constituent des réflecteurs et sont par exemple en acier inoxydable. Les plaques internes $1b_1/1c_1$ de la double paroi constituant le fond et le couvercle sont également réfléchissantes et sont par exemple en acier inoxydable.

L'enceinte comporte, dans sa partie interne, deux parois 1d/1e parallèles entre elles et aux parois d'extrémités $1a_1/1a_2$. Ces parois 1d/1e constituent des réflecteurs par exemple en acier inoxydable et sont fixées aux plaques internes des demi-coquilles $1a_7/1a_8$. Leur disposition est telle que le volume central de l'enceinte est d'une section droite hexagonale régulière. Les deux parois 1d/1e comportent une pluralité d'orifices répartis sur leur surface de telle sorte à assurer une circulation d'air dans ledit volume central dans lequel est disposé le ou les moules. Ces parois 1d/1e délimitent avec les autres parois de l'enceinte deux caissons 11/12 aux extrémités latérales de l'enceinte. Un ventilateur 13 est raccordé à l'axe creux 3 et est fixé au montant 6 qui supporte l'enceinte. L'air mis en circulation par le ventilateur 13 et circulant dans le sens des flèches est d'abord admis dans le caisson 11, est réparti dans celui-ci, passe à travers les orifices de la paroi 1d, circule dans le volume central et autour du moule, passe à travers les orifices de la paroi 1e et est recueilli dans le caisson 12 et évacué par l'autre axe creux 4.

Le volume central de l'enceinte comporte, du côté du fond 1b, un plateau 14 monté à rotation sur l'axe cental yy1 de l'enceinte et comportant un moyeu central de fort diamètre 14a par exemple creux, lequel est engagé dans un fourreau cylindrique $2c_1$ qui s'étend à travers la traverse 2c du supporte en U 2. Le moyeu central 14a est fermé à sa partie située du côté dudit volume et est fixé, par son autre extrémité, à un roulement à billes ou à rouleau 15, lui-même fixé, par sa cage, à la traverse 2c. Un isolant thermique se présentant sous la forme d'une rondelle 16 est inséré entre le moyeu 14a et le roulement 15 pour éviter de chauffer le roulement par conduction. Une couronne d'entraînement 17 du plateau 14 est fixée au moyeu 14a et coopère par sa denture avec un pignon 18 calé sur l'arbre de sortie d'un motoréducteur 19 fixé à la partie inférieure de la traverse. Le plateau 14 comporte plusieurs bras radiaux 14b, par exemple au nombre dix, qui s'étendent du moyeu central 14a jusqu'à proximité des réflecteurs internes 1d/1e/1a7/1a8. Ces bras 14b sont reliés entre eux par des barres de liaison 14c, lesquelles sont tangentes à un cercle théorique concentrique au moyeu 14a. Par exemple, les bras radiaux 14b s'étendent à l'extérieur du polygone formé par lesdites barres de liaison, lesquelles forment un hexagone régulier. Le plateau 14 est destiné à supporter un ou plusieurs moules, lesquels sont entraînés en rotation autour de l'axe yy1 sous l'effet du motoréducteur 19. Un carter 20 recouvre les organes situés à la partie inférieure de l'enceinte.

Le volume central de l'enceinte comporte des éléments chauffants répartis sur le fond 1b, le couvercle 1c et les parois latérales dudit volume 1d/1e/1a7/1a8. Lesdits éléments sont des éléments radiants de préférence des résistances électriques. Les éléments radiants qui recouvrent le fond 1b et le couvercle 1c, 21/22 sont enroulés en spirale et sont répartis sur la quasi totalité de leur surface. Les éléments 21 occupent la surface comprise entre le moyeu 14a et les parois latérales de l'enceinte et sont disposés entre le fond 1b et le plateau 14. Les éléments radiants 23, qui sont répartis sur la hauteur et à la périphérie interne du volume de l'enceinte, sont situés dans des plans sensiblement parallèles entre eux et perpendiculaires à l'axe yy1. Ils forment des spires d'un contour hexagonal et sont fixés devant les réflecteurs 1d/1e/1a7/1a8 sur des barrettes isolantes 24 et entourent ainsi le moule qui est fixé au plateau ajouré 14.

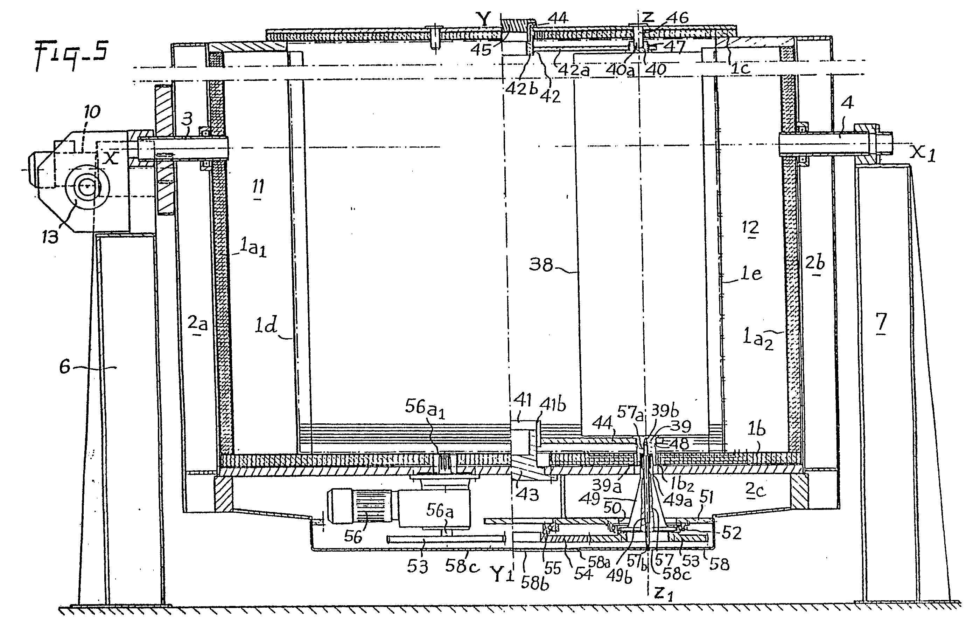

De préférence et tel que cela est illustré sur le dessin les résistances 23 sont regroupées en plusieurs ensembles 23₁/23₂ ... 23₁₀ répartis sur la hauteur du volume interne de l'enceinte. La figure 3 illustre, de façon schématique, l'alimentation desdits ensembles 23₁ à 23₁₀ et également des éléments de fond 21 et des couvercles 22. Charque ensemble 23₁ à 23₁₀ et ceux 21 et 22 comporte un bouton 25 de mise en service associé à une minuterie permettant de régler la durée d'alimentation. Lesdits éléments sont montés de façon connue en dérivation sur un circuit triphasé 26 aboutissant à un collecteur tournant 27. Les boutons 25 et leur minuterie sont montés dans un boîtier 28 fixé au montant 2b du support en U 2 et dans lequel boîtier aboutit le réseau électrique de chauffage par radiation.

Le moule 29, représenté en traits mixtes sur la figure 1 est disposé à l'intérieur des résistances chauffantes qui l'enveloppent de touts côtés. Sa fixation au plateau 14 est obtenue au moyen d'organes de verrouillage 29a montés à rotation à quart de tour par exemple à la partie inférieure du moule. Comme cela est représenté à la figure 2, le moule peut comporter six organes 29a disposés à proximité de la paroi périphérique du moule et venant se placer sur le côté de certains bras radiaux 14b.

Chaque organe de verrouillage comporte une partie débordante 29a₁ qui se place par rotation d'un quart de tour du verrou 29 au-dessous des bras radiaux 14b. Coaxialement à son axe de rotation, chaque verrou comporte un logement 29a₂ formant des pans, par exemple quatre pans, dans lequel logement on engage une clé de commande 30 dont l'extrémité 30a est d'une section droite carrée pour coopérer avec ledit logement. A son autre extrémité, la clé comporte un organe de préhension 30b qui, lorsque l'on manœuvre les verrous, se trouve à l'extérieur du carter 20. Cette clé est passée dans des orifices réservés dans le carter, la traverse 2c et le fond de l'enceinte 1b pour accéder aux organes de verrouillage. Le chauffage du ou des moules est obtenu par rayonnement des conducteurs électriques. Ces derniers étant disposés devant les réflecteurs 1b₁/1c₁/1d/1e/1a7/1a8, le rayonnement dirigé vers l'arrière des conducteurs est réfléchi sur les pièces en rotation ce qui procure un très bon rendement. La puissance de chauffage est sélectionnée et répartie par commutation de divers ou de tous les ensembles d'éléments 23₁ ... 23₁₀/21/22 en agissant sur les commutateurs 26.

Compte tenu des moyens de chauffage obtenus: le rayonnement, la chaleur est directement transférée dans le moule, à l'inverse de la convection forcée habituellement utilisée qui est pénalisée d'un coefficient d'échange faible.

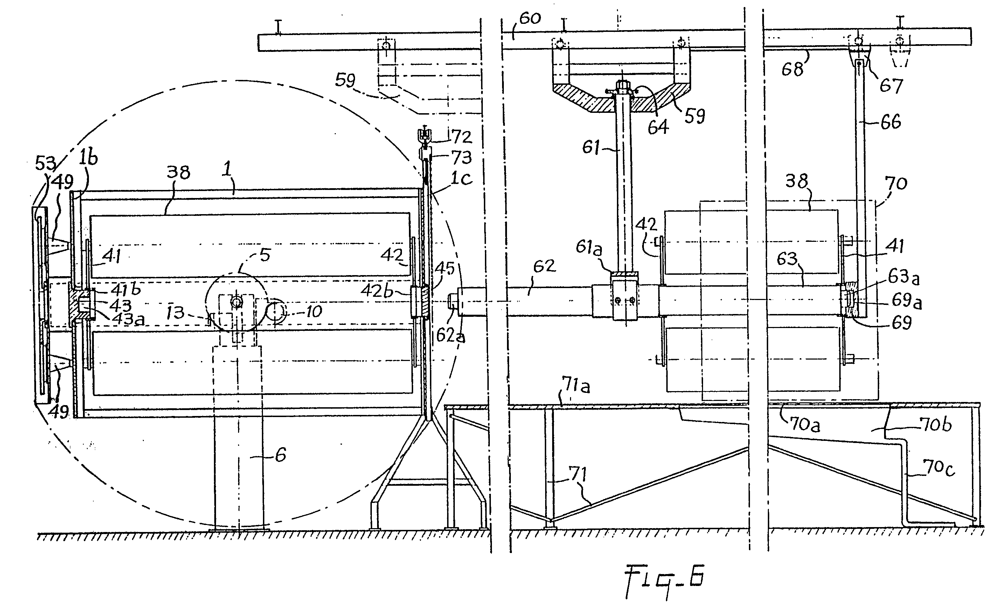

Un premier refroidissement du ou des moules est obtenu par circulation d'air tel que cela a déjà été ci-avant. La rotation des moules favorise encore la répartition uniforme des températures. L'utilisation d'une enceinte fermée qui circonscrit d'assez près les moules permet d'obtenir de grandes vitesses de circulation d'air sans débit prohibitif. Pour certaines fabrications, il est nécessaire de terminer le refroidissement des moules par pulvérisation d'eau. La machine comporte ainsi deux postes de refroidissement qui sont disposés de part et d'autre de l'enceinte. Un exemple d'installation de ce type est illustré à la figure 4 du dessin.

L'enceinte 1 montée à rotation sur son bâti 6/7 est placée dans une charpente 31 et au-dessous d'une plateforme de travail 31a délimitée par un garde corps 31b. La plateforme comporte une trappe centrale à travers de laquelle est passé le ou les moules 32. Sur le dessin l'enceinte 1 est représentée immobilisée en position verticale avec son couvercle 1c ouvert. Le moule 32 est porté par un chariot 33 roulant sur un rail 34 situé au-dessus de l'enceinte et s'étendant horizontalement au-dessus du centre de celle-ci. Dans l'axe du rail 34, l'enceinte 1 comporte de part et d'autre deux postes de refroidissement 35/36 éloignés de l'enceinte selon une même distance. Le rail 34 est d'une longueur suffisante pour que le chariot 33 puisse présenter le moule 32 au droit du poste 36. Le dispositif est du type à va et vient et comporte un deuxième chariot 37 qui se déplace sur le rail 34 pour desservir le poste 35. Chaque poste se compose d'une paroi périphérique 35a/36a et d'un bac de réception et d'écoulement 35b/36b. Des diffuseurs d'eau 35c/36c sont répartis sur le côté du poste et au fond de celui-ci pour pulvériser l'eau sur un moule 32. Les deux chariots 33/37 comportent un palan 37a d'un type connu et comportant des moyens pour entraîner le moule 32 en rotation autour de son axe longitudinal de façon à pulvériser l'eau sur sa paroi latérale. La conception de l'installation permet grâce aux deux chariots 33/37 de mettre en œuvre des fabrications en continu en procédant au moulage dans l'enceinte centrale et en utilisant alternativement l'un et l'autre poste de refroidissement complémentaire 35/36.

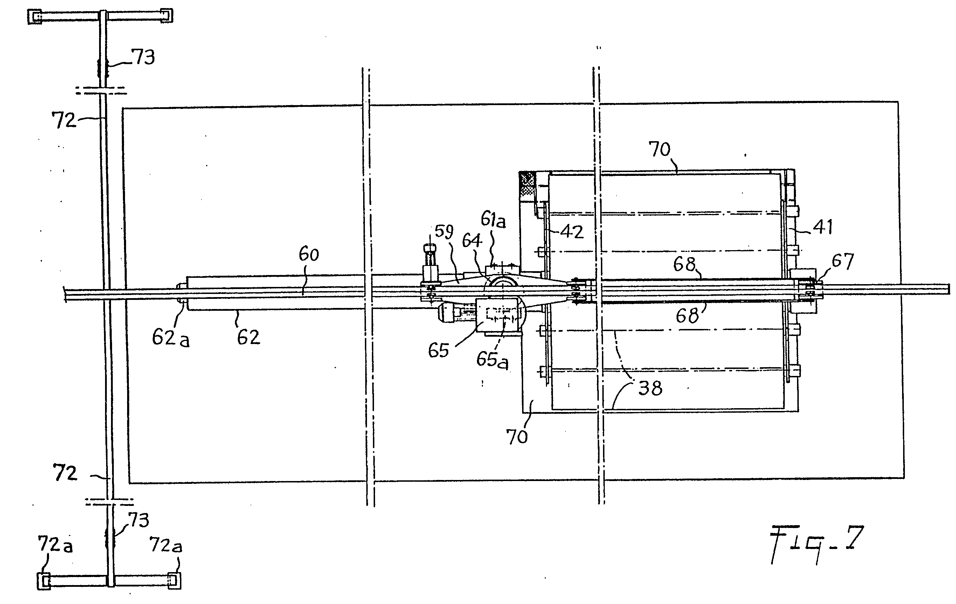

La figure 5 représente une machine selon l'invention dont l'enceinte est adaptée pour recevoir plusieurs moules 38, lesquels sont entraînés en rotation autour de leur axe longitudinal zz1. La conception générale de l'enceinte et son bâti sont semblables à ceux de la machine décrite en référence à la figure 1. Les différences portent notamment sur l'organisation de l'ensemble des moules 38 et de leur entraînement en rotation. Par exemple l'enceinte peut recevoir six moules 38 équidistants de l'axe central yy1 du volume interne de l'enceinte dans lequel sont installés les éléments radiants 21/22/23. Chaque moule comporte en outre et à son extrémité qui se place du côté du four 1b, un tourillon 39 et à celle qui lui est opposée un autre tourillon 40. Ces tourillons 39/40 sont placés dans des orifices circulaires réservés à l'extrémité des bras 41a/42a d'un support étoilé 41/42. Ces supports 41/42 comportent un moyeu central 41b/42b, par exemple une partie de tube, à partier duquel moyeu s'étendent lesdits bras 41a/42a. Les bras qui se raccordent à un des moyeux sont tous dans un même plan et tous les bras sont de même longueur. Un support 42 est montré à la figure 7 du dessin. Chaque moule 38 est ainsi monté entre deux bras 41a/42a, lesquels sont parallèles entre eux. Le moyeu 41b est monté autour d'un axe central 43 fixé au fond 1b de l'enceinte. Le moyeu 42b est monté autour d'un autre axe central 44 fixé au couvercle 1c. Un bouchon 45 est engagé dans l'axe 44.

Chaque tourillon 40 comporte un logement cylindrique 40a dans lequel est engagé un axe amovible 46. Les axes 46 sont de préférence réunis sur une même monture, pouvant être maintenus ou enlevés ensembles. Chaque tourillon 40 comporte une gorge périphérique 40b située à l'extérieur et à proximité des bras 42a dans laquelle gorge est placée une agrafe 47. Ces agrafes maintiennent en translation la position relative des tourillons 40 et des bras 42a. Chaque tourillon 39 comporte également une gorge 39a périphérique située à l'extérieur et à proximité des bras 41a. Cette gorge reçoit, comme pour le tourillon 40, une agrafe 48 pour éviter que les bras 41a n'échappent aux tourillons 39. Ceux-ci sont passées dans des orifices 1b2 réservés dans le fond 1b de l'enceinte et comportent à leur extrémité libre un orifice cannelé femelle 39a dans lequel pénètre l'extrémité cannelée mâle d'un arbre 49 qui adopte, tel que cela est illustré sur le dessin à la figure 5, la forme d'une fusée. L'arbre 49 est passé dans un orifice 50 pratiqué dans un support 51 fixé à la traverse 2c et est monté à rotation sur une butée à billes ou à rouleaux 52, fixée par sa cage à ladite traverse 2c. L'arbre 49 comporte, à son extrémité opposée à celle qui comporte les cannelures, une roue dentée 53, dont la denture engrène avec celle d'une couronne centrale 54 montée à rotation libre sur un roulement à billes ou à rouleaux 55 fixés audit support 51. La disposition des roues dentées 53 est telle qu'elles engrènent avec la couronne centrale 54, sans toutefois coopérer entre elles. L'entraînement de cet ensemble de rouse 53/54 est obtenu par un motoréducteur 56 dont l'arbre de sortie 56a s'étend de part et d'autre du réducteur et est cannelé à l'une de ses extrémités 56a1 pour coopérer avec un tourillon cannelé femelle 39 et comporte à son autre extrémité une roue dentée 53 calée sur l'arbre 56a.

Chacun des arbre 49 et l'arbre 56a du motoréducteur comportent, en leur centre, un conduit 49b s'étendant sur toute sa longueur.

Dans ce conduit 49b, est engagée une tige 57, filetée à son extrémité 57a pour être vissée dans un logement taraudé 39b réservé au centre du tourillon 39. Ces tiges filetées 57 assurent la liaison des moules 38 et des arbres 49/52a. Elles comportent à leur extrémité opposée à celle qui est filetée, des moyens de préhension pour être vissées ou dévissées. Ces moyens consistent par exemple en un carrelet ou un six pans 57b et une clé correspondante. L'ensemble des roues 53 et le motoréducteur 56 sont protégés par un carter 58 fixé à la partie inférieure de l'enceinte. Le carter comporte un orifice de visite 58a, masqué par une porte amovible 58b et des orifices 58c pour accéder aux tiges 57.

Les figures 6 et 7 illustrent une machine selon l'invention dans la variante décrite en référence à la figure 5 et dont l'enceinte est adaptée pour recevoir un ensemble de moules 38 montés entre deux supports étoilés 41/42.

Dans un mode de réalisation, cette machine comporte un dispositif de chargement/déchargement à arbre tournant. A la figure 6, l'enceinte est représentée dans une position sensiblement horizontale de chargement/déchargement. Le dispositif de chargement/déchargement se compose d'un chariot aérien 59 qui se déplace sur un rail 60 disposé au-dessus de la machine et sur son axe longitudinal. Le chariot 59 comporte une colonne 61 s'étendant vers le bas et portant à son extrémité inférieure deux broches 62/63, lesquelles sont en opposition et s'étendent perpendiculairement à la colonne 61. La longueur de chacune des broches est telle qu'un ensemble de moules 38 peut être porté par chacune d'elles. Le diamètre desdites broches est légèrement inférieur au diamètre des moyeux 41b/42b dans lesquels les broches sont engagées au moment du chargement ou du déchargement de l'enceinte 1. Chaque broche 62/63 comporte à son extrémité libre un bout d'arbre 62a/63a destiné à pénétrer dans le logement 43a de l'arbre central 43, fixé au fond 1b de l'enceinte. Ces broches 62/63 sont montées sur une chape 61a, fixée à l'extrémité inférieure de la colonne 61. Celle-ci comporte, à sa partie supérieure, une roue dentée 64 qui engrène par exemple avec une vis sans fin 65a, calée sur l'arbre de sortie d'un motoréducteur 65 pour obtenir la rotation des broches selon par exemple une demi-circonférence. La longueur du rail 60 est calculée de telle sorte que le chariot 59 puisse se déplacer du côté de l'enceinte 1 et que la broche 62 puisse pénétrer dans le logement 43a. De manière à assurer la stabilité de l'ensemble tournant lorsqu'une seule broche est chargée, par exemple celle repérée 63, le dispositif comporte un bras de suspension 66 porté par un chariot 67, monté roulant sur le rail 60. Ce chariot 67 est relié au chariot 59 par deux tirants 68 situés de part et d'autre du rail 60. Le bras de suspension 66 porte à sa partie inférieure un bossage 69 comportant un logement 69a destiné à recevoir le bout d'arbre 62a/63a des broches 62/63. Ainsi monté, le chariot 67 et le bras 66 suivent les déplacements commandés par le chariot 59. L'ensemble des broches 62/63 et la charge portée par la broche 63 sont équilibrés par le bras de suspension 66.

La machine peut comporter un poste de refroidissement par pulvérisation d'eau 70, analogue à celui décrit en référence à la figure 4. Ce poste 70 est porté par une charpente 71 dont le platelage 71a se trouve à proximité de l'ensemble des moules 38. La partie inférieure du poste 70 comporte un caillebotis 70a et au-dessous de celui-ci un bac de réception 70b et une évacuation de l'eau de refroidissement 70c. La deuxième phase de refroidissement par eau d'un ensemble de moules 38 s'opère pendant qu'un autre ensemble de moules est en cours de chauffe dans l'enceinte 1 et intervient après la phase de refroidissement par air.

La machine comporte en outre un portique 72, porté par des piétements 72a dont la traverse haute est constituée par un rail sur lequel se déplacent deux chariots portant des palans 73. Ces palans permettent de supporter le couvercle 1c de l'enceinte qui est, de préférence, en deux parties. L'ouverture des couvercles s'effectue latéralement et de part et d'autre de l'axe yy1 de l'enceinte.

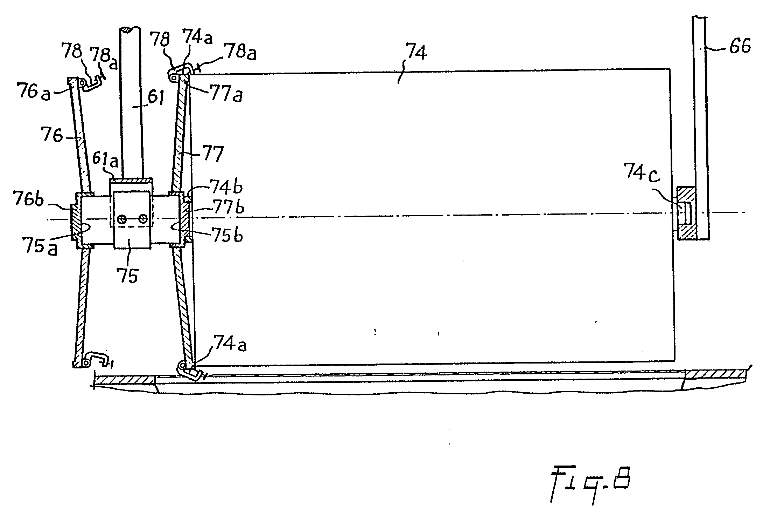

Une variante du dispositif de chargement est illustrée à la figure 8 du dessin. Cette variante s'applique à la manutention des moules de grandes dimensions et dans le cas où un seul moule 74 est monté dans l'enceinte 1.

Un tel dispositif comporte à l'extrémité inférieure de la colonne 61 et dans la chape 61a, un mandrin cylindrique 75 perpendiculaire à la colonne 61 dont les extrémités 75a/75b sont à égale distance de celle-ci. A chacune desdites extrémités, le mandrin 75 comporte des bras radiaux 76/77 tous d'égale longueur comportant à leur extrémité libre des moyens de fixation 78 du moule 74. Les bras 76 et les bras 77 divergent légèrement deux à deux à partir du mandrin 75 par rapport à l'axe longitudinal de la colonne et leurs extrémités 76a/77a sont situées dans des plans parallèles entre eux et à celui dans lequel est situé l'axe de la colonne 61.

Le moule 74 comporte, à sa partie qui est destinée à venir en regard des supports 75/76/77, une surépaisseur constituée par une sorte de frette qui entoure le moule et qui forme un épaulement. Les moyens de fixation 78 sont par exemple des genouillères dont l'organe de serrage 78a est mis en appui sur ledit épaulement.

Les deux supports comportent en outre un bossage de centrage 76b/77b qui s'engage au moment de la mise en place du moule 74 dans un organe tubulaire 74b coaxial au moule. Celui-comporte, à son autre extrémité, un tourillon 74c pour être engagé dans le logement 69a d'un bossage 69 fixé à un bras de suspension identique à celui 66 illustré aux figures 6 et 7.

## Revendications

1. Machine de rotomoulage comportant une enceinte calorifugée (1) montée à rotation sur un bâti (6/7) autour d'un axe sensiblement horizontal ($xx_1$), laquelle enceinte comporte des moyens pour recevoir et entraîner en rotation au moins un moule (29/38/74) autour d'un axe ($yy_1$) perpendiculaire à l'axe de rotation ($xx_1$) de l'enceinte et des moyens de chauffage par radiation (21/22/23) dont le rayonnement est dirigé sur le moule (29/38/74), caractérisée en ce que lesdits moyens de chauffage par radiation sont situés à l'intérieur de ladite enceinte et se composent d'une part d'éléments radiants (23) qui entourent le moule (29/38/74), lesquels éléments sont répartis sur la hauteur de l'enceinte (1) et devant les faces internes réfléchissantes de ses parois latérales ($1d/1e/1a_7/1a_8$) et d'autre part d'éléments radiants (21/22) qui sont répartis devant les faces internes réfléchissantes ($1b_1$) de son fond (1b) et ($1c_1$) de son couvercle (1c) pour réfléchir les radiations vers la partie centrale de l'enceinte où se trouve le moule (29/38/74) pour chauffer celui-ci par rayonnement.

2. Machine selon la revendication 1, caractérisée en ce que les éléments radiants (23) sont répartis à la fois sur la hauteur et à la périphérie interne de l'enceinte (1), lesquels éléments sont situés dans des plans sensiblement parallèles entre eux et perpendiculaires à l'axe de rotation ($yy_1$) du moule et les éléments radiants (21/22) sont répartis devant la face interne ($1b_1$) du fond (1b) et (1c) du couvercle (1c) pour occuper la surface délimitée par les éléments radiants (23) qui s'étendent à la périphérie interne de l'enceinte.

3. Machine selon l'une quelconque des revendications 1 et 2, caractérisée en ce qu'elle comporte plusieurs ensembles d'éléments radiants ($23_1$ ... à $23_{10}$) répartis à la périphérie interne de l'enceinte (1), lesquels ensembles sont superposés pour couvrir la hauteur de l'enceinte et comportent chacun des moyens (25) de commande de la chauffe pour moduler celle-ci sur la hauteur de l'enceinte.

4. Machine selon l'une quelconque des revendications 1 à 3, dont l'enceinte (1) est montée à rotation autour de deux axes creux (3/4) coaxiaux et sensiblement horizontaux, caractérisée en ce que l'enceinte (1) est d'une section droite polygonale et comporte, à ses extrémités latérales où se trouvent lesdits axes (3/4), deux caissons (11/12) délimités par les parois latérales ($1a_3/1a_4$) de l'enceinte et par deux parois réfléchissantes (1d/1e) parallèles entre elles et à l'axe ($yy_1$) de rotation du moule (29/38/74), lesquelles parois s'étendent sur la hauteur de l'emplacement du moule, comportent une pluralité d'ouvertures pour le passage de l'air de refroidissement du moule, lequel air est admis froid dans l'un des caissons (11) par l'un desdits axes (3), est réparti sur la hauteur de l'emplacement du moule par la paroi perforée (1d) dudit caisson (11) et est recueilli dans l'autre caisson (12) après être passé sur le moule (29/38/74) pour être évacué chaud par l'autre partie d'axe (4).

5. Machine selon l'une quelconque des revendications 1 à 4, caractérisée en ce que les éléments radiants (21/22/23) sont disposés devant la face interne des parois latérales du fond et du couvercle de l'enceinte (1) et devant les faces des parois perforées (1d/1e) situées du côté de l'emplacement du moule.

6. Machine selon l'une quelconque des revendications 1 à 5, dont le moule (29/74) est monté sur un plateau (14) entraîné en rotation à la partie inférieure de l'enceinte (1), caractérisée en ce que ledit plateau (14) est ajouré et se déplace en rotation au-dessus desdits éléments radiants (21) qui sont répartis sur le fond (1b) de l'enceinte.

7. Machine selon la revendication 6, caractérisée en ce que le plateau (14) se compose de plusieurs bras radiaux (14b) s'étendant à partier d'un moyeu central (14a) monté tournant dans le fond de l'enceinte (1), lesquels bras (14b) sont reliés l'un à l'autre par des barres de liaison (14c) tangentes à un cercle théorique concentrique audit moyeu (14a).

8. Machine selon l'une quelconque des revendications 6 et 7, dont le moule (29/74) est constitué par deux demi-coquilles assemblables et comporte un fond par lequel il repose sur le plateau (14), caractérisé en ce que le moule comporte des organes de verrouillage (29a) pour le solidariser au plateau (14), lesquels organes sont actionnés de l'extérieur de l'enceinte (1) au moyen d'une clé (30) passée dans au moins une ouverture réservées dans le fond (1b) de l'enceinte (1).

9. Machine selon la revendication 8, caractérisée en ce que lesdits organes (29a) sont des verrous du type à quart de tour, lesquels se composent d'un corps (29b) se terminant par une extrémité (23₁) débordant sur le côté et sont montés pivotants autour d'axes perpendiculaires au fond du moule dans une disposition selon laquelle lesdits corps (29b) des verrous se placent sur un des côtés des bras radiaux (14c) du plateau (14) et que le verrouillage est réalisé lorsque la partie débordante (29a₁) est pivotée et positionnée au-dessous desdits bras (14b).

10. Machine selon l'une quelconque des revendications 1 à 5, dont l'enceinte (1) est agencée pour recevoir plusieurs moules (38) équidistants de son centre, caractérisée en ce que l'enceinte (1) comporte, à sa partie inférieure, des arbres (59) passés dans des orifices (1b₂) réservés dans le fond (1b) de l'enceinte, lesquels arbres sont équidistants du centre de l'enceinte et comportent des moyens de liaison (49a) pour coopérer avec des moyens d'entraînement (39) des moules (38) pour les mettre en rotation, lesquels arbres (49) sont soumis à des moyens moteurs (53/54/56) situés à l'extérieur de l'enceinte (1).

11. Machine selon la revendication 10, caractérisée en ce que chacun des moules (38) comporte, à sa partie qui se place du côté du fond (1b) de l'enceinte et sur son axe longitudinal, un tourillon (39) cannelée femelle, pour coopérer avec l'extrémité cannelée mâle (49a) d'un arbre (49) et en ce que la liaison de l'arbre (49) et du moule est réalisée au moyen d'une tige (57) passée dans un conduit (49b) coaxial audit arbre et commandée de l'extérieur de l'arbre, laquelle tige (57) est filetée à son extrémité située du côté de la partie cannelée (49a) dudit arbre pour se visser dans un taraudage (39b) réservé dans le fond de la cavité cannelée (39a) du tourillon (39) et coaxial à celui-ci, laquelle tige (57) comporte à son autre extrémité des moyens de préhension (57b) pour la faire tourner autour de son axe en vue de son vissage ou de son dévissage.

12. Machine selon la revendication 11, caractérisée en ce que chacun des arbres (49) d'entraînement des moules (38) comporte une roue dentée (53) dont la denture coopère avec une couronne centrale (54) montée à rotation libre, l'entraînement se faisant par des moyens moteurs (56) qui attaquent une desdites roues dentées (53) disposées à la périphérie de ladite couronne (54).

13. Machine selon l'une quelconque des revendications 10 à 12, caractérisée en ce que les moules (38) comportent à leur extrémité opposée à celle où se trouvent les tourillons cannelés (39) d'autres tourillons (40) coaxiaux auxdits tourillons cannelés (39) et comportant un alésage dans lequel pénètre en axe amovible (46), lesquels axes amovibles sont situés à la partie supérieure de l'enceinte (1) et s'étendent perpendiculairement au couvercle (1c) de celle-ci.

14. Machine selon l'une quelconque des revendications 10 à 13, caractérisée en ce que les moules (38) sont montés entre deux supports étoilés (41/42) dont les bras radiaux (41a) d'un support sont parallèles aux bras radiaux (42a) de l'autre, et comportent à leur extrémité libre un orifice circulaire pour recevoir un tourillon (39/40) et permettre la rotation des moules (38), chacun des moules étant porté par deux bras (41a/42a), lesquels tourillons (39/40) sont tenus en translation par des moyens (47/48) qui s'opposent à ce que les supports (41/42) échappent aux tourillons (39/40).

15. Machine selon l'une quelconque des revendications 10 à 14, caractérisée en ce que les bras radiaux (41a/42a) de chacun des deux supports (41/42) s'étendent à partir d'un moyeu central (41b/42b).

16. Machine selon l'une quelconque des revendications 10 à 15, caractérisée en ce qu'elle comporte des moyens de chargement comprenant un chariot aérien (59) qui porte une colonne (61) s'étendant vers le bas dans une position sensiblement verticale et montée tournante autour de son axe longitudinal, à l'extrémité libre (61a) de laquelle sont fixées deux broches (62/63) s'étendant en opposition et perpendiculairement à la colonne (61), lesquelles broches (62/63) se placent dans une position sensiblement coaxiale à l'enceinte (1) immobilisée en position sensiblement horizontale, en ce que chaque ensemble de moules (38) est porté par une desdites broches (62/63) laquelle est engagée dans les moyeux (41b/42b) des supports de moules et en ce que le chariot (59) comporte des moyens pour être déplacé dans l'axe de l'enceinte ainsi immobilisée pour placer un ensemble de moules (38) dans l'enceinte (1) ou retirer cet ensemble de celle-ci.

17. Machine selon l'une quelconque des revendications 1 à 9, caractérisée en ce qu'elle comporte des moyens de chargement comprenant un chariot aérien (59) qui porte une colonne (61) s'étendant vers le bas dans une position sensiblement verticale et montée tournante autour de son axe longitudinal, à l'extrémité libre (61a) de laquelle sont montés deux supports de moules situés de part et d'autre de la colonne (61), lesquels supports comprennent des bras radiaux (76/77), lesquels bras des deux supports divergent légèrement deux à deux à partir d'un mandrin central (75) par rapport à la colonne (61) et ont leurs extrémités libres (76a/77a) situées dans des plans parallèles entre eux et à la colonne (61) et comportent auxdites extrémités des moyens (78) de fixation du moule mis en appui sur un épaulement en saillie (74a) réservé du côté du bord supérieur du moule, lesdits supports comportent en outre des moyens de centrage (74b/77b) du moule.

18. Machine selon l'une quelconque des revendications 16 ou 17, caractérisée en ce qu'elle comporte un bras de suspension (66) monté à roulement sur le rail (60) du chariot (59), dont l'extrémité libre du bras se situe au niveau des broches (62/63) ou du mandrin central (75) des supports et comporte un logement cylindrique (69a) pour recevoir un tourillon (63a) coaxial au moyeu d'un des supports (41) d'un ensemble de moules (38) ou d'un seul moule (74) pour soutenir la charge portée par l'une des broches (62) ou l'un des supports (76) fixés à la colonne (61) lorsque l'autre broche (63) ou l'autre support (77) est déchargé.

19. Machine selon l'une quelconque des revendications 10 à 18, caractérisée en ce qu'elle comporte un portique (72) disposé devant l'entrée de l'enceinte (1) en position horizontale et perpendiculairement à l'axe longitudinal yy1 de celle-ci, lequel portique (72) comporte deux palans (73) guidés le long de sa traverse haute, lesquels palans (73) comportent des moyens d'accrochage du couvercle (1c) de l'enceinte qui est en deux parties pour s'effacer latéralement de part et d'autre de l'enceinte (1).

20. Machine selon l'une quelconque des revendications 1 à 9, caractérisée en ce qu'elle comporte des moyens de chargement comportant un rail (34) situé au-dessus de l'enceinte (1), de telle sorte que lorsqu'elle est immobilisée en position sensiblement verticale, le rail (34) s'étend au-dessus du centre de l'enceinte, laquelle comporte de part et d'autre, un poste de refroidissement (35/36) des moules de pulvérisation d'eau et en ce que sur ce rail (34) deux chariots (33/37) circulent en va et vient pour que pendant qu'un moule est en phase de refroidissement, un autre soit en phase de chauffe.

21. Machine selon la revendication 20, caractérisée en ce que les moyens de chargement comportent une charpente (31) qui entoure l'enceinte (1) par le dessus et dont le plancher (34a) comporte une trappe pour le passage des moules (32) et qui correspond à l'extrémité ouverte de l'enceinte (1) immobilisée en position sensiblement verticale.

22. Machine selon l'une quelconque des revendications 20 ou 21, caractérisée en ce que les chariots (33/37) comportent des moyens pour entraîner les moules (32) en rotation autour de leur axe longitudinal pour les faire tourner devant les rampes de pulvérisation d'eau (35c) montées fixes dans les postes de refroidissement.

23. Machine selon l'une quelconque des revendications 16 à 18, caractérisée en ce qu'elle comporte au-dessous du rail (60), dans le prolongement de l'enceinte (1) mise en position sensiblement horizontale et au lieu où se trouve la broche (63) opposée à celle (62) qui est présente devant l'enceinte (1) après son extraction de celle-ci, un poste de refroidissement (70), par pulvérisation d'eau, des moules (38/74).

**Patentansprüche**

1. Maschine zum Rotationsformen, umfassend ein an einem Rahmen (6/7) um eine im wesentlichen horizontale Achse (xx₁) drehbar montiertes wärmeisoliertes Gehäuse (1), welches Gehäuse Mittel zur Aufnahme von mindestens einer Form (29/38/74) und Versetzen derselben in Rotation um eine zur Rotationsachse (xx₁) des Gehäuses senkrechte Achse (yy₁) und Strahlungsheizmittel (21/22/23) umfaßt, wobei die Strahlung auf die Form (29/38/74) gerichtet ist, dadurch gekennzeichnet, daß sich die Strahlungsheizmittel im Inneren des Gehäuses befinden und sich einerseits aus die Form (29/38/74) umgebenden Strahlungselementen (23), welche über die Höhe des Gehäuses (1) und vor den reflektierenden Innenflächen seiner Seitenwände (1d/1e/1a₇/1a₈) verteilt angeordnet sind, und anderseits aus Strahlungselementen (21/22), die vor den reflektierenden Innenflächen (1b₁) seines Bodens (1b) und (1c₁) seines Deckels (1c) verteilt angeordnet sind, zusammensetzen, um die Strahlen zum Mittelteil des Gehäuses, in dem sich die Form (29/38/74) befindet, zwecks Erhitzens derselben durch Strahlung zu reflektieren.

2. Maschine nach Anspruch 1, dadurch gekennzeichnet, daß die Strahlungselemente (23) gleichzeitig über die Höhe und am Innenumfang des Gehäuses (1) verteilt angeordnet sind, welche Elemente sich in im wesentlichen zueinander parallelen und zur Rotationsaches (yy₁) der Form senkrechten Ebenen befinden, und die Strahlungselemente (21/22) vor der Innenfläche (1b₁) des Bodens (1b) und (1c₁) des Deckels (1c) verteilt angeordnet sind, um die von den sich am Innenumfang des Gehäuses erstreckenden Strahlungselementen (23) begrenzte Fläche einzunehmen.

3. Maschine nach einem der Ansprüche 1 und 2, dadurch gekennzeichnet, daß sie mehrere Gruppen von Strahlungselementen (23₁... bis 23₁₀) umfaßt, die am Innenumfang des Gehäuses (1) verteilt angeordnet sind, welche Gruppen zum Überdecken der Höhe des Gehäuses übereinander gelagert sind und jeweils Mittel (25) zum Steuern des Heizens zwecks Regulierens desselben über die Höhe des Gehäuses umfassen.

4. Maschine nach einem der Ansprüche 1 bis 3, bei der das Gehäuse (1) um zwei koaxiale und im wesentlichen horizontale Hohlachsen (3/4) rotationsgelagert ist, dadurch gekennzeichnet, daß das Gehäuse (1) polygonalen Querschnitts ist und an seinen seitlichen Enden, wo sich die Achsen (3/4) befinden, zwei Kästen (11/12) umfaßt, die von den Seitenwänden (1a₃/1a₄) des Gehäuses und von zwei zueinander und zur Rotationsachse (yy₁) der Form (29/38/74) parallelen reflektierenden Wänden (1d/ 1e) begrenzt sind, welche Wände sich über die Höhe des Standortes der Form erstrecken und eine Mehrzahl von Öffnungen für den Durchtritt von Kühlluft für die Form aufweisen, welche Luft kalt in einen der Kästen (11) über eine der Achsen (3) aufgegeben, über die Höhe des Standorts der Form durch die perforierte Wand (1d) des Kastens (11) verteilt und im anderen Kasten (12) nach Durchtritt durch die Form (29/38/74) gesammelt wird, um über den anderen Achsenteil (4) heiß ausgetragen zu werden.

5. Maschine nach einem der Ansprüche 1 bis 4, dadurch gekennzeichnet, daß die Strahlungselemente (21/22/23) vor der Innenfläche der Seitenwände des Bodens und des Deckels des Gehäuses (1) und vor den Flächen der auf der Seite des Standorts der Form befindlichen perforierten Wände (1d/1e) angeordnet sind.

6. Maschine nach einem der Ansprüche 1 bis 5, bei der die Form (29/74) auf einer rotationsbetriebenen Platte (14) im unteren Teil des Gehäuses (1) gelagert ist, dadurch gekennzeichnet, daß die Platte (14) durchbrochen ist und sich über den am Boden (1b) des Gehäuses verteilten Strahlungselementen (21) in Rotation bewegt.

7. Maschine nach Anspruch 6, dadurch gekennzeichnet, daß die Platte (14) aus mehreren radialen Armen (14b) zusammengesetzt ist, die von einer zentralen, drehbar im Boden des Gehäuses (1) gelagerten Nabe (14a) ausgehen und mittels Verbindungsstangen (14c), die Tangenten zu einem gedachten zur Nabe (14a) konzentrischen Kreis sind, miteinander verbunden sind.

8. Maschine nach einem der Ansprüche 6 und 7, bei der die Form (29/74) durch zwei aneinanderfügbare Halbschalen gebildet ist und einen Boden umfaßt, mit dem sie auf der Platte (14) ruht, dadurch gekennzeichnet, daß die Form Verriegelungsorgane (29a) zum Fixieren an der Platte (14) umfaßt, welche Organe von außerhalb des Gehäuses (1) mit einem in mindestens eine im Boden (1b) des Gehäuses (1) vorgesehene Öffnung gesteckten Schlüssel (30) betätigbar ist.

9. Maschine nach Anspruch 8, dadurch gekennzeichnet, daß die Organe (29a) Bolzen des Typs mit Vierteldrehung sind, gebildet aus einem Körper (29b), der in einem über die Seite vorstehenden Ende (23₁) endet, und um zum Boden der Form senkrecht stehende Achsen in eine Anordnung verschwenkbar sind, gemäss welcher die Körper (29b) der Bolzen an einer der Seiten der radialen Arme (14c) der Platte (14) in Lage kommen, und daß die Verriegelung dann hergestellt ist, wenn der vorstehende Teil (29a₁) verschwenkt und unterhalb der Arme (14b) positioniert ist.

10. Maschine nach einem der Ansprüche 1 bis 5, bei der das Gehäuse (1) zur Aufnahme mehrerer Formen (38) in gleichem Abstand von seinem Mittelpunkt ausgelegt ist, dadurch gekennzeichnet, daß das Gehäuse (1) in seinem unteren Teil Wellen (59) umfaßt, die durch im Boden (1b) des Gehäuses vorgesehene Öffnungen (1b₂) gesteckt sind, welche Wellen sich in gleichem Abstand vom Mittelpunkt des Gehäuses befinden und Verbindungsmittel (49a) zum Zusammenwirken mit Antriebsmittel (39) der Formen (38) zwecks Versetzens derselben in Rotation umfassen, wobei die Wellen (49) außerhalb des Gehäuses (1) befindlichen Motormitteln (53/54/56) unterworfen sind.

11. Maschine nach Anspruch 10, dadurch gekennzeichnet, daß jede der Formen (38) in ihrem auf der Seite des Bodens (1b) des Gehäuses und an dessen Längsachse zu liegen kommenden Teil einen geriffelten Aufnahme-Drehzapfen (39) zum Zusammenwirken mit dem geriffelten Einsteck-Ende (49a) einer Welle (49) umfaßt, und daß die Verbindung der Welle (49) und der Form mittels einer Stange (57) erfolgt, welche in einer mit der Welle koaxialen Leitung (49b) eingesetzt und von außerhalb der Welle gesteuert ist, welche Stange (57) an ihrem auf der Seite des geriffelten Teils (49a) der Welle befindlichen Ende mit einem Außengewinde zum Einschrauben in ein im Boden des geriffelten Hohlraums (39a) des Drehzapfens (39) vorgesehenes und koaxial mit diesem verlaufendes Innengewinde versehen ist und welche Stange (57) an ihrem anderen Ende Greifmittel (57b) zum Drehen derselben um ihre Achse zwecks Ein- oder Ausschraubens aufweist.

12. Maschine nach Anspruch 11, dadurch gekennzeichnet, daß jede der Antriebswellen (49) der Formen (38) ein Zahnrad (53) umfaßt, dessen Zahnung mit einem zentralen, zur freien Rotation gelagerten Zahnkranz (54) zusammenwirkt, wobei der Antrieb durch Motormittel (56) erfolgt, die eines der am Umfang des Zahnkranzes (54) angeordneten Zahnräder (53) antreiben.

13. Maschine nach einem der Ansprüche 10 bis 12, dadurch gekennzeichnet, daß die Formen (38) an ihrem jenem, wo sich die geriffelten Drehzapfen (39) befinden, gegenüberliegenden Ende weitere mit diesen geriffelten Drehzapfen (39) koaxiale Drehzapfen (40) umfassen, welche eine Bohrung aufweisen, in die eine ausbaubare Achse (46) dringt, welche ausbaubare Achsen im oberen Teil des Gehäuses (1) angeordnet sind und sich senkrecht zum Deckel (1c) desselben erstrecken.

14. Maschine nach einem der Ansprüche 10 bis 13, dadurch gekennzeichnet, daß die Formen (38) zwischen zwei Sternträgern (41/42) montiert sind, wobei die radialen Arme (41a) eines Trägers parallel zu den radialen Armen (42a) des anderen sind, und an ihrem freien Ende eine kreisförmige Öffnung zur Aufnahme eines Drehzapfens (39/40) und zum Ermöglichen der Rotation der Formen (38) aufweisen, wobei jede der Formen von zwei Armen (41a/42a) getragen ist und die Drehzapfen (39/40) von Mitteln (47/48), die dagegen wirken, daß die Träger (41/42) aus den Drehzapfen (39/40) springen, in Translation gehalten sind.

15. Maschine nach einem der Ansprüche 10 bis 14, dadurch gekennzeichnet, daß sich die radialen Arme (41a/42a) jedes der beiden Träger (41/42) von einer zentralen Nabe (41b/42b) weg erstrecken.

16. Maschine nach einem der Ansprüche 10 bis 15, dadurch gekennzeichnet, daß sie Lademittel mit einem Schwebewagen (59) umfaßt, welcher eine sich nach unten in im wesentlichen vertikaler Position erstreckende und drehbar um ihre Längsachse gelagerte Säule (61) trägt, an deren freiem Ende (61a) zwei entgegengesetzt und senkrecht zur Säule (61) verlaufende Spindeln (62/63) befestigt sind, welche Spindeln (62/63) in eine mit dem in im wesentlichen horizontaler Position festgestellten Gehäuse (1) im wesentlichen koaxiale Lage kommen, daß jede Gruppe von Formen (38) von einer der Spindeln (62/63) getragen ist, welche in die Naben (41b/42b) der Formenträger eingreift, und daß der Wagen (59) Mittel zum Verschieben desselben in der Achse des so festgestellten Gehäuses zum Anordnen einer Gruppe von Formen (38) im Gehäuse (1) oder Entfernen dieser Gruppe aus demselben umfaßt.

17. Maschine nach einem der Ansprüche 1 bis 9, dadurch gekennzeichnet, daß sie Lademittel mit einem Schwebewagen (59) umfaßt, welcher eine sich nach unten in im wesentlichen vertikaler Position erstreckende und drehbar um ihre Längsachse gelagerte Säule (61) trägt, an deren freiem Ende (61a) zwei zu beiden Seiten der Säule (61) befindliche Formenträger montiert sind, welche Träger radiale Arme (76/77) aufweisen, wobei jeweils zwei Arme der beiden Träger von einem zentralen Dorn (75) in bezug auf die Säule (61) leicht auseinanderragen und ihre freien Enden (76a/77a) in zueinander und zur Säule (61) parallelen Ebenen liegen und an diesen Enden Mittel (78) zum Fixieren der auf einer auf der Seite des oberen Randes der Form vorgesehenen vorspringenden Schulter (74a) abgestützten Form umfassen, wobei die Träger weiters Mittel (74b/77b) zum Zentrieren der Form umfassen.

18. Maschine nach einem der Ansprüche 16 oder 17, dadurch gekennzeichnet, daß sie einen rollend auf der Schiene (60) des Wagens (59) montierten Aufhängungsarm (66) umfaßt, dessen freies Ende sich in Höhe der Spindeln (62/63) oder des zentralen Dorns (75) der Träger befindet und eine zylindrische Aufnahme (69a) zur Aufnahme eines Drehzapfens (63a) koaxial mit der Nabe eines der Träger (41) einer Gruppe von Formen (38) oder einer einzigen Form (74) zwecks Unterstützung der von einer oder einem der auf der Säule (61) befestigten Spindeln (62) bzw. Träger (76) getragenen Last, wenn die andere Spindel (63) bzw. der andere Träger (77) frei von Last ist, aufweist.

19. Maschine nach einem der Ansprüche 10 bis 18, dadurch gekennzeichnet, daß sie einen Portalrahmen (72) umfaßt, welcher Portalrahmen (72) vor dem Eingang des Gehäuses (1) in horizontaler Position und senkrecht zur Längsachse (yy₁) desselben angeordnet ist und zwei entlang seiner oberen Traverse geführte Flaschenzüge (73) aufweist, welche Flaschenzüge (73) Mittel zum Einhaken des Deckels (1c) des Gehäuses, der zwecks seitlichen Ausweichens auf beide Seiten des Gehäuses (1) aus zwei Teilen besteht, umfassen.

20. Maschine nach einem der Ansprüche 1 bis 9, dadurch gekennzeichnet, daß sie Lademittel mit einer Schiene (34) umfaßt, die oberhalb des Gehäuses (1) angeordnet ist, so daß bei Feststellen desselben in im wesentlichen vertikaler Position die Schiene (34) oberhalb des Zentrums des Gehäuses verläuft, welches auf beiden Seiten eine Kühlstation (35/36) mit Wasserzerstäubung für die Formen umfaßt, und daß auf der Schiene (34) zwei Wägen (33/37) hin- und herfahren, damit, während sich eine Form in der Abkühlungsphase befindet, eine weitere in der Heizphase ist.

21. Maschine nach Anspruch 20, dadurch gekennzeichnet, daß die Lademittel ein Gerüst (31) umfassen, welches das Gehäuse (1) von oben umgibt und dessen Boden (31a) eine Klappe für den Durchtritt der Formen (32) umfaßt, die dem offenen Ende des in im wesentlichen vertikaler Position festgestellten Gehäuses (1) entspricht.

22. Maschine nach einem der Ansprüche 20 oder 21, dadurch gekennzeichnet, daß die Wägen (33/37) Mittel zum Versetzen der Formen (32) in Rotation um ihre Längsachse umfaßt, um dieselben vor den fix in den Kühlstationen montierten Wasserzerstäubungsrampen (35c) in Drehung zu versetzen.

23. Maschine nach einem der Ansprüche 16 bis 18, dadurch gekennzeichnet, daß sie unterhalb der Schiene (60) in Verlängerung des in im wesentlichen horizontale Position gebrachten Gehäuses (1) an der Stelle, wo sich die Spindel (63) gegenüber der nach ihrem Austritt aus dem Gehäuse (1) vor demselben angeordneten (62) befindet, eine Kühlstation (70) mit Wasserzerstäubung für die Formen (38/74) umfaßt.

## Claims

1. Rotary moulding machine comprising a heat-insulated enclosure (1) mounted to rotate on a frame (6/7) about a substantially horizontal axis (xx₁), which enclosure comprises means for receiving and driving in rotation at least one mould (29/38/74) about an axis (yy₁) perpendicular to the axis of rotation (xx₁) of the enclosure, and heating and radiating elements (21/22/23) the radiation of which is directed on the mould (29/38/74), characterized in that said radiating elements are situated inside said enclosure and comprise on the one hand radiating elements (23) surrounding the mould (29/38/74), said elements are distributed over the height of the enclosure (1) and in front of the inner reflecting faces of its lateral walls (1d/1e/1a₇/1a₈) and on the other hand radiating elements (21/22) which are distributed in front of the inner reflecting faces (1b₁) of its bottom (1b) and (1c₁) of its cover (1c) to reflect the radiations towards the central part of the enclosure where the mould (29/38/74) is located in order to heat said mould by radiation.

2. The machine according to claim 1, characterized in that the radiating elements (23) are distributed both over the height and on the inner periphery of the enclosure (1), which elements are located in planes substantially parallel to one another and perpendicular to the axis of rotation (yy₁) of the mould and the radiating elements (21/22) are distributed in front of the inner face (1b₁) of the bottom (1b) and (1c₁) and of the cover (1c) in order to occupy the surface defined by the radiating elements (23) which extend on the inner periphery of the enclosure.

3. The machine according to any one of claims 1 and 2, characterized in that it comprises a plurality of assemblies of radiating elements (23₁.... to 23₁₀) distributed on the inner periphery of the enclosure (1), which assemblies are superposed in order to cover the height of the enclosure and each comprise means (25) for controlling the heating in order to modulate the latter over the height of the enclosure.

4. The machine according to any one of claims 1 to 3, of which the enclosure (1) is mounted to rotate about two parts of hollow shaft (3/4) which are coaxial and substantially horizontal, characterized in that the enclosure (1) is of polygonal cross section and comprises, at its lateral ends where said parts of shaft (3/4) are located, two boxes (11/12) defined by the lateral walls ($1a_3/1a_4$) of the enclosure and by two reflecting walls (1d/1e) parallel to each other and to the axis ($yy_1$) of rotation of the mould (29/38/74), which walls extend over the height of the location of the mould, comprise a plurality of openings for the passage of air for cooling the mould, which air is admitted cold in one of the boxes (11) by one of said parts of shaft (3), is distributed over the height of the location of the mould through the perforated wall (1d) of said box (11) and is collected in the other box (12) after having passed over the mould (29/38/74) to be evacuated hot by the other part of shaft (4).

5. The machine according to any one of claims 1 to 4, characterized in that the radiating elements (21/22/23) are disposed in front of the inner face of the lateral walls of the bottom and of the cover of the enclosure (1) and in front of the faces of the perforated walls (1d/1e) located towards the location of the mould.

6. The machine according to any one of claims 1 to 5, of which the mould (29/74) is mounted on a plate (14) driven in rotation in the lower part of the enclosure (1), characterized in that said plate (14) is perforated and moves in rotation above said radiating elements (21) which are distributed on the bottom (1b) of the enclosure.

7. The machine according to claim 6, characterized in that the plate (14) is composed of a plurality of radial arms (14b) extending from a central hub (14a) mounted to rotate in the bottom of the enclosure (1), which arms (14b) are connected to one another by connecting bars (14c) tangential to a theoretical circle concentric to said hub (14a).

8. The machine according to any one of claims 6 and 7, of which the mould (29/74) is constituted by two half-shells adapted to be assembled together, and comprises a bottom by which it rests on the plate (14), characterized in that the mould comprises locking members (29a) for connecting it to the plate (14), which members are actuated from outside the enclosure (1) by means of a key (30) passed in at least one opening reserved in the bottom (1b) of the enclosure (1).

9. The machine according to claim 8, characterized in that said members (29a) are locks of the quarterturn type, which are composed of a body (29b) terminating by an end ($23_1$) projecting on the side and are mounted to pivot about axes perpendicular to the bottom of the mould in an arrangement in which said bodies (29b) of the locks are placed on one of the sides of the radial arms (14c) of the plate (14) and locking is effected when the projecting part ($29a_1$) is pivoted and positioned below said arms (14b).

10. The machine according to any one of claims 1 to 5, of which the enclosure (1) is arranged to receive a plurality of moulds (38) equidistant from its centre, characterized in that the enclosure (1) comprises in its lower part, shafts (59) passed in orifices ($1b_2$) reserved in the bottom (1b) of the enclosure, which shafts are equidistant from the centre of the enclosure and comprise connecting means (49a) for cooperating with means (39) for driving the moulds (38) in rotation, which shafts (49) are subjected to drive means (53/54/56) located outside the enclosure (1).

11. The machine according to claim 10, characterized in that each of the moulds (38) comprises, in its part located towards the bottom (1b) of the enclosure and on its longitudinal axis, a female fluted journal (39), to cooperate with the male fluted end (49a) of a shaft (49) and the connection of the shaft (49) and of the mould is effected by means of a rod (57) passed in a conduit (49b) coaxial to said shaft and controlled from outside the shaft, which rod (57) is threaded at its end located towards the fluted part (49a) of said shaft to screw in a tapping (39b) reserved in the bottom of the fluted cavity (39a) of the journal (39) and coaxial thereto, said rod (57) comprises at its other end gripping means (57b) for rotating it about its axis with a view to screwing or unscrewing it.

12. The machine according to claim 1, characterized in that each of the shafts (49) for driving the moulds (38) comprises a toothed wheel (53) whose toothing cooperates, with a central ring (54) mounted to rotate freely, drive being effected by drive means (56) which attack one of said toothed wheels (53) disposed on the periphery of said ring (54).

13. The machine according to any one of claims 10 to 12, characterized in that the moulds (38) comprise at their end opposite the end where the fluted journals (39) are located, other journals (40) coaxial to said fluted journals (39) and comprising a bore in which penetrates a removable shaft (46), which removable shafts are located in the upper part of the enclosure (1) and extend perpendicularly to the cover (1c) thereof.

14. The machine according to any one of claims 10 to 13, characterized in that the mould (38) are mounted between two star-shaped supports (41/42) of which the radial arms (41a) of one suport are parallel to the radial arms (42a) of the other, and comprise at their free end a circular orifice for receiving a journal (39/40) and for allowing rotation of the moulds (38), each of the moulds being borne by two arms (41a/42a), which journals (39/40) are maintained in translation by means (47/48) which prevent the support (41/42) from escaping the journals (39/40).

15. The machine according to any one of claims 10 to 14, characterized in that the radial arms (41a/42a) of each of the two supports (41/42) extend from a central hub (41b/42b).

16. The machine according to any one of claims 10 to 15, characterized in that it comprises loading means comprising an aerial carriage (59) which bears a column (61) extending downwardly in a substantially vertical position and mounted to rotate about its longitudinal axis, at the free end (61a) of which are fixed two spindles (62/63) extending in opposition and perpendicularly to column (61), which spindles (62/63) are placed in a position substantially coaxial to the enclosure immobilized in substantially horizontal position, in that each assembly of moulds (38) is borne by one of said spindles (62/63) which is engaged in the hubs (41b/42b) of the mould supports, and in that the carriage (59) comprises means for being displaced in the axis of the enclosure thus immobilized in order to place an assembly of moulds (38) in the enclosure (1) or withdraw said assembly therefrom.

17. The machine according to any one of claims 1 to 9, characterized in that it comprises loading means comprising an aerial carriage (59) which bears a column (61) extending downwardly in a substantially vertical position and mounted to rotate about its longitudinal axis, at the free end (61a) of which are mounted two supports of moulds located on either side of the column (61), which supports comprise radial arms (76/77), which arms of the two supports diverge slightly in two's from a central mandrel (75) with respect to the column (61) and have their free ends (76a/77a) located in planes which are parallel to one another and to the column (61) and comprise at said ends means (78) for fixing the mould placed in abutment on a projecting shoulder (74a) reserved towards the upper edge of the mould, said supports further comprising means (74b/77b) for centering the mould.

18. The machine according to any of claims 16 or 17, characterized in that it comprises a suspension arm (66) mounted to roll on the rail (60) of the carriage (59), of which the free end of the arm is located at the level of the spindles (62/63) of the central mandrel (75) of the supports and comprises a cylindrical housing (69a) for receiving a journal (63a) coaxial to the hub of one of the supports (41) of an assembly of moulds (38) or a single mould (74) to support the load borne by one of the spindles (62) or one of the supports (76) fixed to the column (61) when the other spindle (63) or the other support (77) is unloaded.

19. The machine according to any one of claims 10 to 18, characterized in that it comprises a gantry (72) disposed in front of the entrance of the enclosure (1) in horizontal position and perpendicularly to the longitudinal axis ($yy_1$) thereof, which gantry (72) comprises two pulley blocks (73) guided along its upper crosspiece, which pulley blocks (73) comprise means for hooking the cover (1c) of the enclosure which is in two parts in order to retract laterally on either side of the enclosure (1).

20. The machine according to any one of claims 1 to 9, characterized in that it comprises loading means comprising a rail (34) located above the enclosure (1) so that, when it is immobilized in substantially vertical position, the rail (34) extends above the centre of the enclosure, which comprises on either side a station (35/36) for cooling the moulds by atomization of water and, on this rail (34), two carriages (33/37) circulate in reciprocating manner so that, whilst one mould is in cooling phase, another is in heating phase.

21. The machine according to claim 20, characterized in that the loading means comprise a framework (31) which surrounds the enclosure (1) by the top and of which the flooring (34a) comprises a trap door for the passage of the moulds (32) and which corresponds to the open end of the enclosure (1) immobilized in substantially vertical position.

22. The machine according to any one of claims 20 or 21, characterized in that the carriages (33/37) comprise means for driving the moulds (32) in rotation about their longitudinal axis to rotate them in front of the water atomization bars (35c) fixedly mounted in the cooling stations.

23. The machine according to any one of claims 16 to 18, characterized in that it comprises, below the rail (60) in line with the enclosure (1) placed in substantially horizontal position and the spot where the spindle (63) opposite the one (62) which is present in front of the enclosure (1) after its extraction therefrom, is located, a station (70) for cooling the moulds (38/74) by atomization of water.

Fig-1

Fig. 2

Fig-3

Fig-4

Fig. 5

Fig-6

0 158 575

Fig-7

Fig.8